# EUROPEAN PATENT APPLICATION

(11) **EP 4 616 772 A1**
(43) Date of publication of application: **17.09.2025**
(21) Application number: 24164009.3
(22) Date of filing: 15.03.2024
(51) Int. Cl.: A47G 33/12

(54) **FOLDABLE SUPPORT DEVICE AND ARTIFICIAL TREE**

(71) Applicant: Dongguan Polyfilm Plastic Products Company Limited, Dong Guan City, Guang Dong Province 523000 (CN)
(72) Inventor: LIANG, Berlin, Dong Guan City, Dong Guan City (CN); PAS, Hylke, Dong Guan City, 523000 (CN)
(74) Representative: Finnegan Europe LLP

(57) **Abstract**

The embodiment of the present disclosure provides a foldable support device and an artificial tree, which includes a support base(11), a support leg assembly (2) and a first locking mechanism (3). The support base is provided with a hinged portion (12) and a mounting portion (11) configured to mount an object to be supported. The support leg assembly is hinged to the hinged portion. The first locking mechanism is movably disposed on the support base. The first locking mechanism includes a locking state in which the support leg assembly is locked in a folded state and an unlocked state in which the support leg assembly is unlocked from the folded state. The support device can be easily switched between the folded state and the unfolded state. Meanwhile, when the support device is in a non-use state, the storage space and the transportation space can also be saved.

## Description

### TECHNICAL FIELD

The present disclosure relates to the technical field of support device structure for supporting, in particular to an artificial tree and a foldable support device thereof.

### BACKGROUND

As support structural members for cooperating with stand columns, support devices are widely used in industrial production and daily life. The existing support devices are usually radial fixed structures, which make the support devices large in volume when stored or transported, and there are problems that transfer and carry are very inconvenient and easy to damage.

### SUMMARY

Accordingly, it is necessary to provide a foldable support device and an artificial tree. The support device is capable of being easily switched between a folded state and an unfolded state. Meanwhile, when the support device is in a non-use state, the storage space and the transportation space can also be saved.

An embodiment of the present disclosure provides a foldable support device, which includes a support base, a support leg assembly and a first locking mechanism. The support base is provided with a hinged portion and a mounting portion configured to mount an object to be supported. The support leg assembly is hinged to the hinged portion. The first locking mechanism is movably disposed on the support base. The first locking mechanism has a locking state in which the support leg assembly is locked in a folded state and an unlocked state in which the support leg assembly is unlocked from the folded state. The first locking mechanism is capable of being switched between a locked state and the unlocked state to enable the support leg assembly to be switched between the folded state and an unfolded state.

In an embodiment, the first locking mechanism includes an engaging seat and an engaging pin.

The engaging seat has a first position and a second position. The engaging seat is operable to be switched between the first position and the second position.

The engaging pin is provided in the engaging seat. The engaging pin is engaged with the support leg assembly when the engaging seat is in the first position, and the engaging pin is disengaged from the support leg assembly when the engaging seat is in the second position.

In an embodiment, the support base has a receiving cylinder. A side wall of the receiving cylinder is provided with a first limit hole. The engaging seat is slidably provided within the receiving cylinder. The engaging pin has a connection end and a free end. The connection end is connected to the engaging seat. The free end is capable of extending out from the first limit hole. Another end of the engaging pin is capable of moving along the first limit hole when the engaging seat is switched between the first position and the second position.

In an embodiment, the first limit hole extends in a direction parallel to an axial direction of the receiving cylinder.

In an embodiment, the first locking mechanism includes a first reset member provided within the receiving cylinder. The first reset member permanently biases the engaging seat toward the first position.

In an embodiment, the engaging seat has a receiving groove. The receiving cylinder has a first abutting portion. The first reset member is provided within the receiving groove. An end of the first reset member abuts against a groove bottom of the receiving groove, and another end of the first reset member abuts against the first abutting portion.

In an embodiment, the first locking mechanism includes a second reset member provided within the engaging seat. The second reset member permanently biases the engaging pin toward the support leg assembly.

In an embodiment, the engaging seat is provided with a second receiving cavity and a through hole in communication with the second receiving cavity. The second reset member is provided in the second receiving cavity. The engaging pin is at least partially movable in the second receiving cavity. An end of the second reset member abuts against an inner wall of the second receiving cavity, and another end of the second reset member abuts against the engaging pin, so as to permanently bias the engaging pin in a direction extending out of the through hole.

In an embodiment, the engaging seat includes a first seat body and a second seat body detachably connected to the first seat body, and the first seat body and the second seat body enclose to form the second receiving cavity.

In an embodiment, a cavity wall of the second receiving cavity facing the through hole is provided with a limit projecting pillar, and the second reset member is sleeved on the limit projecting pillar.

In an embodiment, the connection end has a limit boss located within the second receiving cavity, and the limit boss is capable of abutting against a hole wall of the through hole.

In an embodiment, the engaging seat has an operation portion, and the operation portion at least partially extends out of the receiving cylinder.

In an embodiment, the mounting portion is connected to an end of the receiving cylinder, another end of the receiving cylinder away from the mounting portion has a first opening, and the operation portion is capable of extending out of the receiving cylinder through the first opening.

In an embodiment, the first locking mechanism further includes a limit cover. The engaging seat has a first limit projection. The limit cover covers the first opening. The limit cover has a second opening and a second limit projection arranged at an edge of the second opening. The operation portion is capable of extending out of the receiving cylinder through the second opening and the first limit projection is capable of abutting against the second limit projection.

In an embodiment, the first locking mechanism further includes an operation portion, which is an operation sleeve sleeved outside the receiving cylinder and slidable in a direction parallel to an axial direction of the receiving cylinder. The operation sleeve is connected to the engaging seat via a first connector. The receiving cylinder is provided with a second limit hole. The first connector extends into the receiving cylinder through the second limit hole, and the first connector is movable along the second limit hole.

In an embodiment, the support leg assembly has a first locking projection. When the first locking mechanism is in the locked state, the engaging pin abuts against the first locking projection to limit the rotation of the support leg assembly in a first direction. The first direction is a direction of rotation of the support leg assembly from the folded state to the unfolded state.

In an embodiment, the support leg assembly further has a second locking projection. The second locking projection and the first locking projection are arranged separating from each other. The engaging pin is capable of abutting against the second locking projection to limit the support leg assembly from being rotated in the first direction when the engaging seat is in the first position.

In an embodiment, the support device further includes a second locking mechanism including a spring pin assembly provided on the support leg assembly and a locking hole provided on the hinged portion. The spring pin assembly is capable of being engaged with the locking hole to lock the support leg assembly at a predetermined angle.

In an embodiment, the spring pin assembly is capable of being engaged with the locking hole to lock the support leg assembly in the unfolded state.

In an embodiment, the support leg assembly is provided with a receiving hole for receiving the spring pin assembly. The spring pin assembly includes a spring pin and a third reset member. The third reset member permanently biases the spring pin to extend out of the receiving hole, such that the spring pin is engaged with the locking hole.

In an embodiment, the receiving hole is arranged in such a way that the receiving hole passes through a pair of opposite side walls of the support leg assembly. There are two spring pins. Two ends of the third reset member abut against the two spring pins respectively, and the two spring pins are capable of being engaged with the two locking holes respectively.

In an embodiment, the support leg assembly includes a snap box and a support leg body. The snap box is detachably disposed at an end of the support leg body. The snap box is hinged to the hinged portion. The spring pin assembly is provided within the snap box.

In an embodiment, the support leg assembly further includes a pad disposed at another end of the support leg body away from the snap box.

In an embodiment, the hinged portion includes two lugs arranged in parallel with each other. The two lugs enclose to form a snap-in slot, and an end of the support leg assembly is inserted in the snap-in slot and hinged to the two lugs.

In an embodiment, the support base has a receiving cylinder. The first locking mechanism is disposed within the receiving cylinder and is movable in a direction parallel to an axial direction of the receiving cylinder. The mounting portion is disposed at an end of the receiving cylinder, and both the two lugs are connected to the side walls of the receiving cylinder.

In an embodiment, the hinged portion further includes a barrier plate connected between the two lugs. The barrier plate is provided with a limit groove. The support leg assembly has a limit protrusion. When the support leg assembly is in the unfolded state, the limit protrusion is capable of being engaged with the limit groove.

In an embodiment, when the first locking mechanism is in the unlocked state, the support leg assembly is rotated to the unlocked state by its own gravity.

In an embodiment, there are at least two support leg assemblies. The support base has at least two hinged portions, and the at least two support leg assemblies are hinged to the at least two hinged portions respectively.

Another embodiment of the present disclosure provides an artificial tree which includes a tree body and the support device according to any one of the aforementioned embodiments. The tree body is mounted on the mounting portion.

The aforementioned foldable support device has at least the following technical effects:

When the foldable support device provided by the present disclosure expands, the foldable support device is moved from the locked state to the unlocked state by operating the first locking mechanism, and the locking of the support leg assembly by the first locking mechanism is released, such that the support leg assembly is rotated from the folded state to the unfolded state. When the foldable support device is folded, the support leg assembly is capable of being rotated from the folded state to the unfolded state, and first locking mechanism can be used to lock the support leg assembly in the unfold state, thereby saving the storage space and the transportation space. The support device of this embodiment can be easily switched between the folded state and the unfolded state by the first locking mechanism. Meanwhile, when the support device is in an non-use state, the storage space and the transportation space can be saved.

### BRIEF DESCRIPTION OF THE DRAWINGS

The foregoing and other objects, features and advantages of the present disclosure will become more clear as more particularly explained by the preferred embodiment of the present disclosure shown in the drawings. The same reference numerals in the drawings indicate the same parts in their entirety, and the drawings are not deliberately drawn to the same scale as the actual size, focusing on the purpose of the present disclosure.

Other features, objects and advantages of the present disclosure will become more apparent from the detailed description of the non-limiting embodiments with reference to the following drawings:
FIG. 1 is a schematic diagram of a foldable support device in an unfolded state according to an embodiment of the present disclosure.
FIG. 2 is an explosive view of the support device of FIG. 1.
FIG. 3 is a semi-sectional view of the support device of FIG. 1.
FIG. 4 is an enlarged view of portion C shown of FIG. 3.
FIG. 5 is a cross-sectional view of the support device along line A-A of FIG. 3.
FIG. 6 is a schematic diagram of the support device of FIG. 1 in a folded state.
FIG. 7 is a semi-sectional view of the support device of FIG. 6.
FIG. 8 is an enlarged view of portion E of FIG. 7.
FIG. 9 is an explosive view of a support leg assembly and a second locking mechanism of the support device of FIG. 1.
FIG. 10 is a schematic diagram of a first locking mechanism of the support device of FIG. 1.
FIG. 11 is an explosive view of the first locking mechanism of FIG. 10.
FIG. 12 is a top view of the first locking mechanism of FIG. 10.
FIG. 13 is a cross-sectional view of the support device along line B-B of FIG. 12.

### Description of reference numerals:

1: support base; 11: mounting portion; 12: hinged portion; 121: lug; 122: barrier plate or barrier strip; 123: limit groove; 124: snap-in slot; 13: receiving cylinder; 131: first abutting portion; 132: first opening; 133: first limit hole; 14: limit cover; 141: second opening; 142: second limit projection; 2: support leg assembly; 21: support leg body; 211: first side plate; 212: second side plate; 213: engaging position; 22: snap box; 221: first locking projection; 222: second locking projection; 223: circular segment; 224: hole cover; 225: limit protrusion; 23: pad; 231: second abutting portion; 232: engaging portion; 233: support surface; 24: receiving hole; 3: first locking mechanism; 31: engaging seat; 312: second receiving cavity; 3121: limit projecting pillar; 313: through hole; 3131: hole wall; 314: first seat body; 315: second seat body; 32: engaging pin; 321: connection end; 322: free end; 323: limit boss; 33: first reset member; 34:operation portion; 341: first limit projection; 35: receiving groove; 351: curved plate; 352:reinforcing rib plate; 353: third opening; 354: third abutting portion; 36: second reset member; 4: second locking mechanism; 41: spring pin assembly; 411: third reset member; 412: spring pin; 42: locking hole.

### DETAILED DESCRIPTION OF THE EMBODIMENTS

In order to facilitate the understanding of the present disclosure, the present disclosure will be described more fully hereinafter with reference to the related accompanying drawings. Preferred embodiment of the present disclosure is given in the drawings. However, the present disclosure may be embodied in many different forms and is not limited to the embodiments described herein. Conversely, the purpose of providing these embodiments is to make the disclosure of the present disclosure more thorough and comprehensive.

It should be noted that when one element is considered to be "connected" to another element, it may be directly connected to and incorporated with the other element, or it may exist simultaneously as a central element. The terms "mounting," "an end," "another end" and similar expressions used in this article are for illustrative purposes only.

All technical and scientific terms used herein have the same meaning as commonly understood by skilled person in the art to which the present disclosure belongs, unless otherwise defined. The terms used herein in the description of the present disclosure are for the purpose of describing specific embodiments only, and are not intended to limit the present disclosure. The term "and/or" used herein includes any and all combinations of one or more of the associated listed objects.

Reference will be made to the accompanying drawings and embodiments to describe the present disclosure in detail, so that the objects, technical solutions and advantages of the present disclosure can be more apparent and understandable. It should be understood that the specific embodiments described herein are only used to explain the present disclosure, but not to limit the present disclosure.

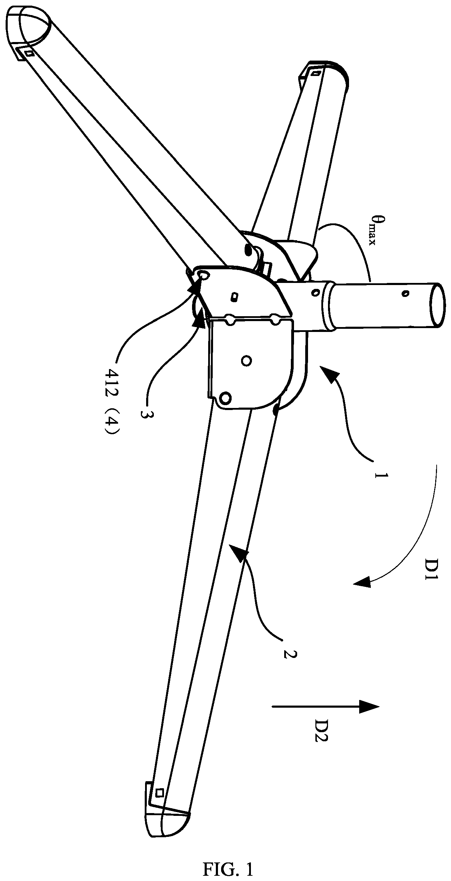

An embodiment of the present disclosure provides a foldable support device, for example, which can be used to support an object such as an artificial tree, a bulletin board, etc. to be supported, such that the object to be supported can be stably placed on a ground or a countertop. In one embodiment, as shown in FIGS. 1 to 4, the support device includes a support base 1, a support leg assembly 2, a first locking mechanism 3 and a second locking mechanism 4.

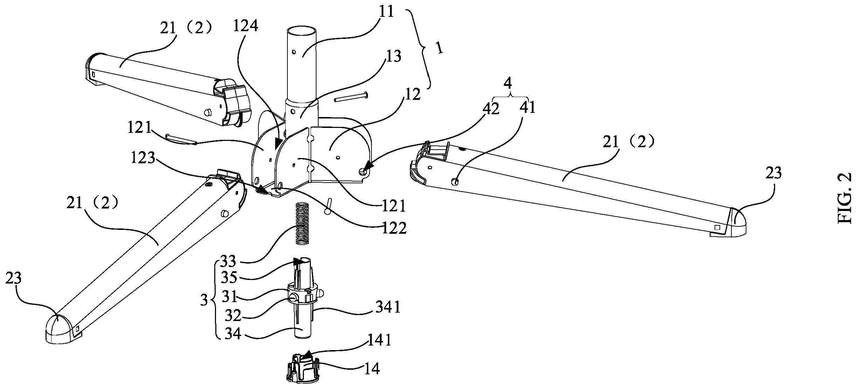

Specifically, as shown in FIG. 2, the support base 1 includes a mounting portion 11, a hinged portion 12, and a receiving cylinder 13. Both the mounting portion 11 and the receiving cylinder 13 are cylindrical, and a radial dimension of the mounting portion 11 is slightly smaller than a radial dimension of the receiving cylinder 13. The mounting portion 11 is fixedly connected to an upper end of the receiving cylinder 13. In this embodiment, the mounting portion 11 and the receiving cylinder 13 are integrally formed. In other embodiments, the mounting portion 11 and the receiving cylinder 13 may be two separate components connected by welding or riveting. The object to be supported in this embodiment, such as the tree trunk of the artificial tree, can be inserted into the mounting portion 11. In other embodiments, for example, the mounting portion 11 may also have a rod structure with a male thread, and the object to be supported has a female thread that can cooperate with the male thread. The structure of the mounting portion 11 may be provided according to the object to be supported.

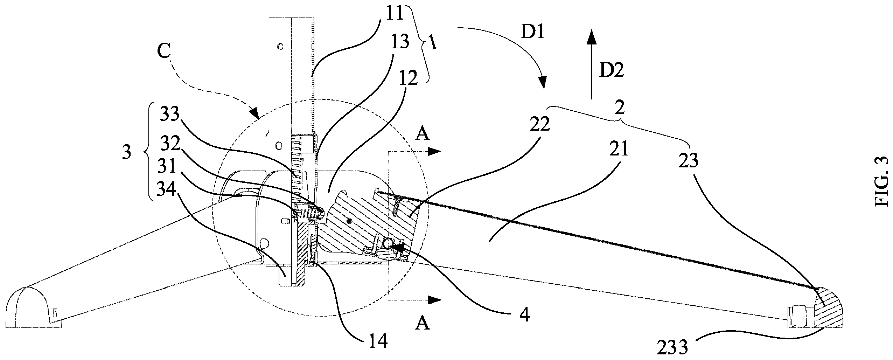

Specifically, as shown in FIGS. 2 and 3, the hinged portion 12 is used to be hinged to the support leg assembly 2. In this embodiment, there are three support leg assemblies 2, the support bases 1 are correspondingly provided with three hinged portions 12, and the three hinged portions 12 are arranged uniformly and circumferentially around an outer surface of the receiving cylinder 13, such that the support device can be more stably placed on the ground or the table surface to support the object to be supported. Of course, in other embodiments, the number of the support leg assemblies 2 and the hinged portions 12 may be set to more or less than three as needed.

Take one of the hinged portions 12 as an example to illustrate its structure. As shown in FIGS. 2 and 3, the hinged portion 12 includes two lugs 121 arranged in parallel with each other and a barrier plate or a barrier strip 122 connected between the two lugs 121. The two lugs 121 enclose to form a snap-in slot 124, and an end of the support leg assembly 2 is inserted in the snap-in slot 124 and hinged to the two lugs 121. When the support leg assembly 2 is rotated relative to the receiving cylinder 13 to a maximum angle of θₘₐₓ, as shown in FIG. 1, the barrier plate or barrier strip 122 can limit the support leg assembly 2 from continuing to rotate in the original direction, thereby avoiding excessive rotation of the support leg assembly 2. In this embodiment, both the two lugs 121 are connected to the side walls of the receiving cylinder 13. In other embodiments, one or both of the two lugs 121 may be connected to an end of the receiving cylinder 13. In other embodiments, the barrier plate or barrier strip 122 may not be provided between the two lugs 121, but rather other structures that can limit the maximum angle of rotation of the support leg assembly 2 may be provided. For example, by providing outwardly extending bumps on the side walls of the receiving cylinder 13 that can limit the continued rotation of the support leg assembly 2 in the original direction when the support leg assembly 2 is rotated relative to the receiving cylinder 13 to a maximum angle of θₘₐₓ.

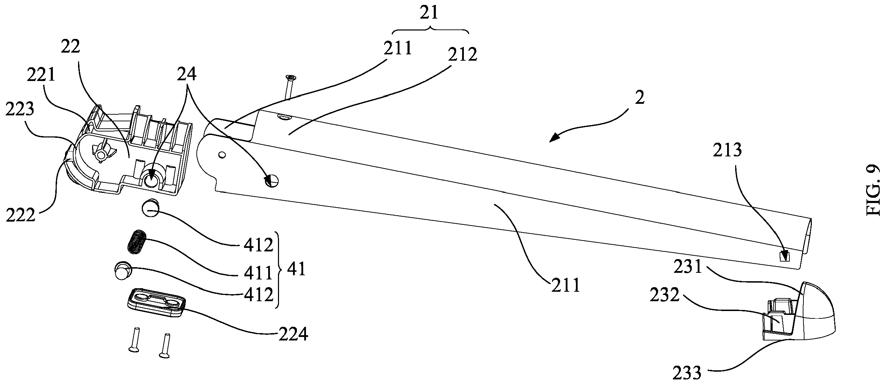

In an embodiment, as shown in FIGS. 3 and 9, the support leg assembly 2 includes a support leg body 21, a snap box 22, and a pad 23. The snap box 22 is detachably located at an end of the support leg body 21 and the pad 23 is located at another end of the support leg body 21 away from the snap box22.

Specifically, as shown in FIG. 9, the support leg body 21 includes two first side plates 211 that are opposite to each other and a second side plate 212 connected between the two first side plates 211. The snap box 22 is connected between the two first side plates 211 and detachably connected to the second side plate 212 for easy assembly and replacement. The snap box 22 and the first side plate 211 are articulated to the two lugs 121 by a pin shaft. The snap box 22 has a first locking projection 221 and a second locking projection 222 which are arranged separating from each other, and a circular arc transition is formed between the first locking projection 221 and the second locking projection 222 by a circular segment 223.

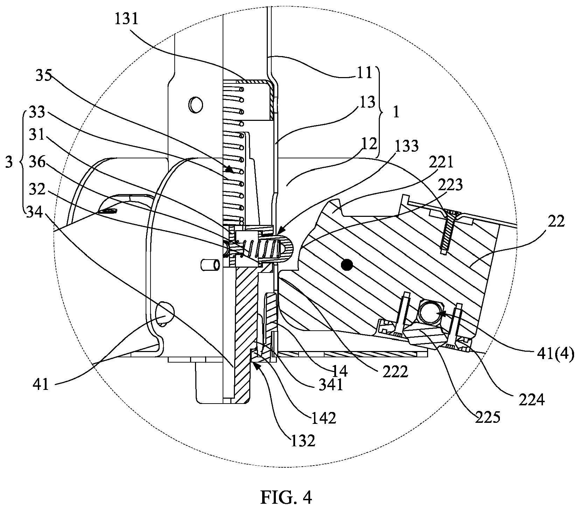

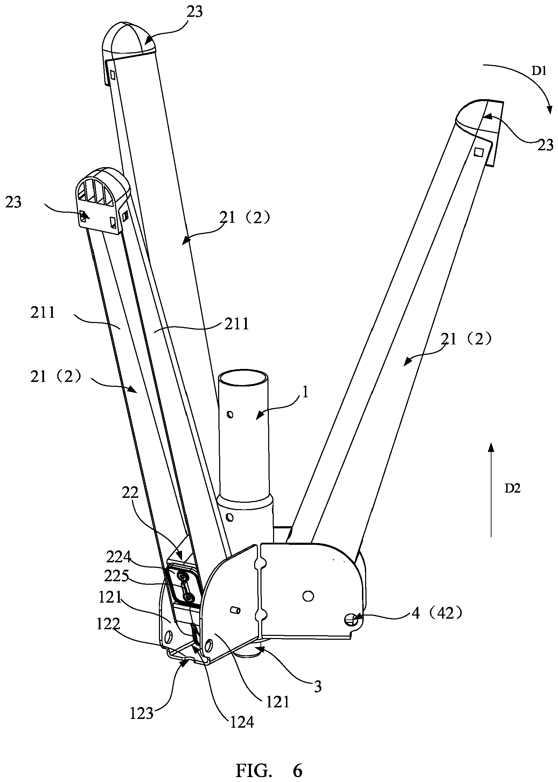

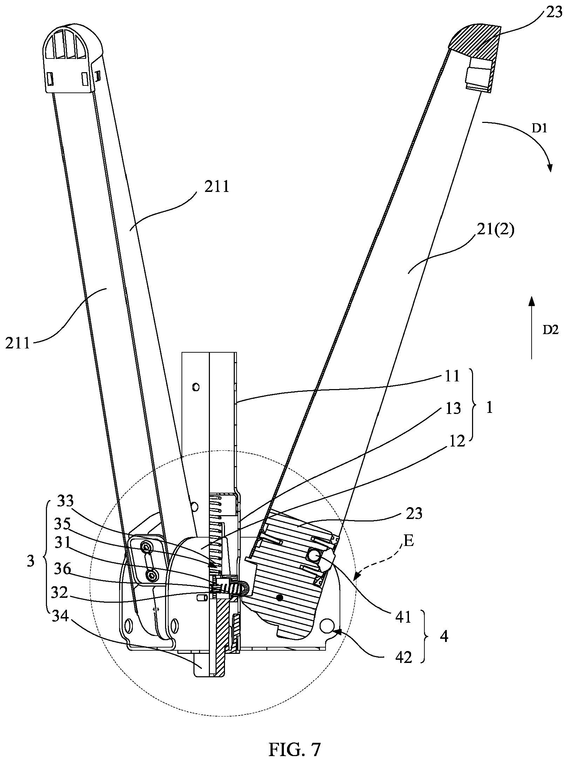

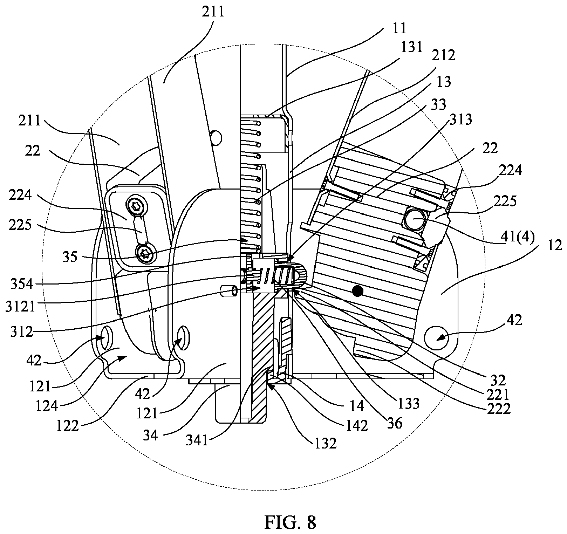

As shown in FIGS. 3 and 4, when the support device is in an unfolded state, the second locking projection 222 is engaged with the first locking mechanism 3 to limit the maximum angle θₘₐₓ between the support leg assembly 2 and the receiving cylinder 13. As shown in FIGS. 7 and 8, when the support device is in a folded state, the first locking projection 221 is engaged with the first locking mechanism 3 to lock the support leg assembly 2 in the folded state. The support leg assembly 2 is provided with a receiving hole 24 (see FIG. 9), which extends through a pair of opposing sidewalls of the support leg assembly 2, i.e., the receiving hole 24 is disposed extending through the snap box 22 and the first side plate 211. The snap box 22 has a detachable hole cover 224 that forms a side wall of the receiving hole 24 of the snap box 22. The barrier plate or barrier strip 122 has a limit groove 123 (see FIG. 6) and the support leg assembly 2 has a limit protrusion 225, specifically, the limit protrusion225 is provided on the hole cover 224. When the support leg assembly 2 is in the unfolded state, the limit protrusion 225 is capable of being engaged with the limit groove 123 to avoid position offset when the support leg assembly 2 is unfolded.

Specifically, as shown in FIG. 9, the pad 23 has a second abutting portion 231, an engaging portion 232, and a support surface 233. The second abutting portion 231 abuts against the end of the support leg body 21 away from the snap box 22. Two first side plates 211 of the support leg body 21 are provided with engaging positions 213, and the engaging portions 232 are inserted between the two first side plates 211 and engaged with the engaging position 213.

It should be noted that when it does not specify that it is a half-unfolded state or a half-folded state, the unfolded state refers to a fully unfolded state when the support leg assembly 2 is rotated to a predetermined maximum expansion angle θₘₐₓ. The half-unfolded state or the half-folded state refers to the unfolded state when the support leg assembly 2 is rotated to an angle θ between the fully unfolded state and the folded state. When the support leg assembly 2 is in the fully unfolded (see FIG. 1), the angle θₘₐₓ between the axis of the support leg assembly 2 and the axis of the mounting portion 11 is greater than or equal to 90°. In this embodiment, the angle θₘₐₓ between the support leg assembly 2 and the mounting portion 11 is an obtuse angle greater than 90°.

In this embodiment, a plane in which the support surface 233 is located intersects with a plane in which a bottom surface of the support leg body 21 is located, and when the support leg assembly 2 is in the unfolded state, as shown in FIG. 3, the support surface 233 is parallel to the ground or the table surface. Thus, when the support leg assembly 2 is in the unfolded state, the support surfaces 233 of the three support leg assemblies 2 are in contact with the ground or the table surface, such that the entire support device can be supported on the ground or the table surface smoothly. Since the angle θₘₐₓ between the support leg assembly 2 and the axis of the mounting portion 11 is an obtuse angle greater than 90°, the mounting portion 11 will be supported by three support leg assemblies 2 and will be in an overhead state, that is, the mounting portion 11 will be separated from the ground or the table surface. In other embodiments, the pad 23 may not be provided.

Further, as shown in FIGS. 2 and 3, the first locking mechanism 3 is movably disposed on the support base 1. The first locking mechanism 3 has a locked state in which the support leg assembly 2 is locked in the folded state and an unlocked state in which the support leg assembly 2 is unlocked from the folded state. The first locking mechanism 3 is capable of being switched between the locked state and the unlocked state. As shown in FIGS. 6 and 7, when the first locking mechanism 3 is in the locked state, the first locking mechanism 3 is capable of locking the support leg assembly 2 in the folded state. When the first locking mechanism 3 is switched from the locked state to the unlocked state, the locking of the first locking mechanism 3 by the support leg assembly 2 is released and the support leg assembly 2 is capable of being rotated in the first direction D1 to the unfolded state, as shown in FIG. 3. The first direction D1 refers to a direction in which the support leg assembly 2 is rotated from the folded state to the unfolded state. In this embodiment, the first direction D1 refers to the direction in which an end of the support leg assembly 2 away from the hinged portion 12 is rotated from a position close to the mounting portion 11 to a position away from the mounting portion 11. When the support device is used, the mounting portion 11 thereof is generally located away from the ground and the table surface and above the hinged portion 12 and the receiving cylinder 13. An object to be supported such as a rod-shaped artificial tree trunk or a support rod of the bulletin board may be inserted on the mounting portion 11. In this embodiment, an end of the support leg assembly 2 away from the hinged portion 12 is folded in a direction close to the mounting portion 11 (that is, a direction opposite to the first direction D1), that is, the support leg assembly 2 is folded upwards around the mounting portion 11 and the object to be supported such as the support rod of the artificial tree trunk or the bulletin board. In this way, the support device is folded into a rod-like structure as a whole and the radial dimension is greatly reduced, such that the space occupied by the support device is less, and the support device is easy to store and transport, but also more convenient for the unfolding operation. When the support leg assembly 2 is in the folded state, a center of gravity of the support leg assembly 2 is offset from hinged portion 12 and is on a side away from hinged portion 12, such that when the first locking mechanism 3 is in the unlocked state, the support leg assembly 2 is capable of being automatically rotated to the unfolded state under its own gravity. Thus, the support leg assembly 2 can be easily switched to the unfolded state without manually operating the support leg assembly.

Specifically, as shown in FIGS. 2 to 4, the first locking mechanism 3 includes an engaging seat 31, an engaging pin 32, a first reset member 33, and a second reset member 36.

Further, as shown in FIGS. 2 to 4, the engaging seat 31 is slidably disposed within the receiving cylinder 13, and the engaging seat 31 has a first position and a second position. The engaging pin 32 is movably disposed on the engaging seat 31. As shown in FIG. 8, when the engaging seat 31 is in the first position, the engaging pin 32 is engaged with the first locking projection 221 of the snap box 22. When the engaging seat 31 is in the second position (not shown), the engaging pin 32 is disengaged from the first locking projection 221. In this embodiment, the second position is located above the first position.

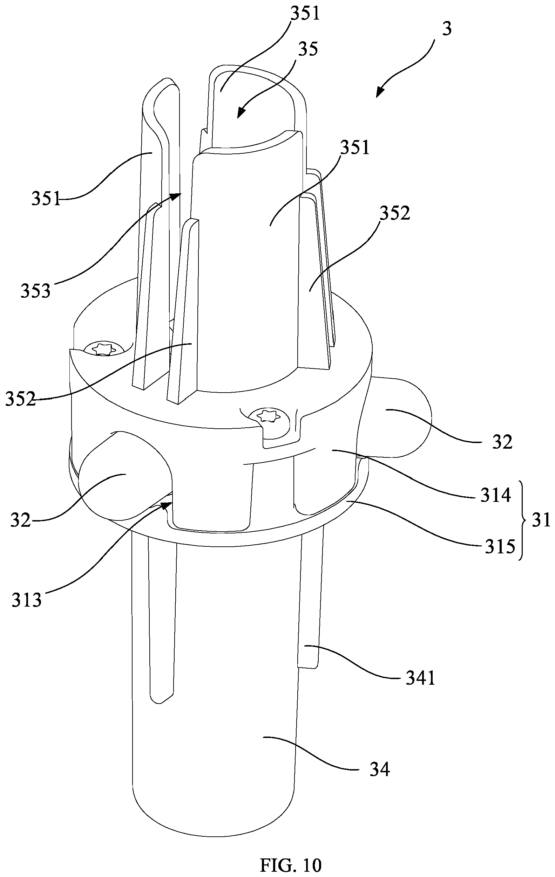

Specifically, as shown in FIGS. 10, 11 and 13, the engaging seat 31 includes a first seat body 314 and a second seat body 315 detachably connected to the first seat body 314, and the first seat body 314 and the second seat body 315 enclose to form a second receiving cavity 312. The side wall of the first seat body 314 and the side wall of the second seat body 315 also enclose to form a through hole 313 in communication with the second receiving cavity 312. The second reset member 36 is provided in the second receiving cavity 312, and at least part of the engaging pin 32 is provided in the second receiving cavity 312. An end of the second reset member 36 abuts against an inner wall of the second receiving cavity 312, and another end abuts against the engaging pin 32, so as to permanently bias the engaging pin 32 in a direction extending out of the through hole 313.

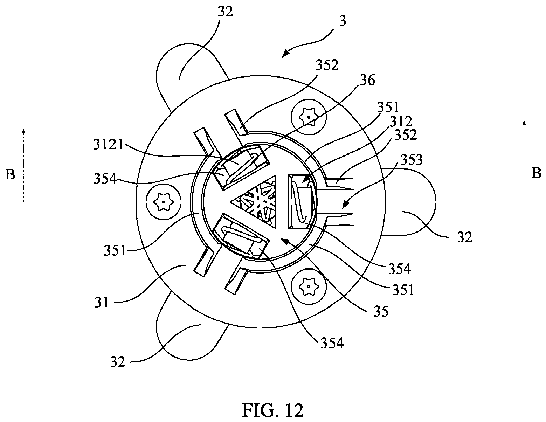

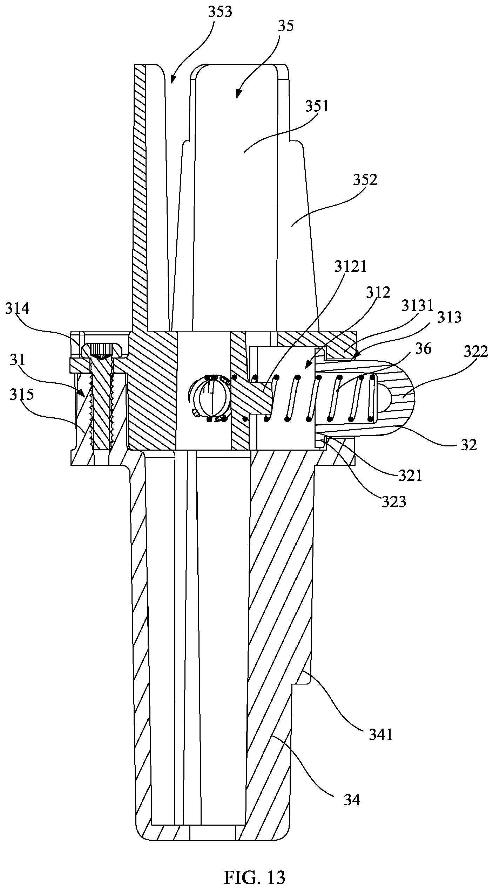

In this embodiment, as shown in FIG. 12, there are three second receiving cavities 312. At least a portion of each second receiving cavity 312 extends into the receiving groove 35 to form a cylindrical structure. The three cylindrical structures form a third abutting portion 354. Optionally, the second reset member 36 may be an elastic member such as a spring, a shrapnel, or the like. In order to avoid the second reset member 36 from being offset, the inner wall of the second receiving cavity 312 is provided with a limit projecting pillar 3121. The limit projecting pillar 3121 is provided on the inner wall of the second receiving cavity 312 opposite to the through hole 313, and the second reset member 36 is sleeved on the limit projecting pillar 3121. In this embodiment, as shown in FIG. 13, the first seat body 314 and the second seat body 315 are detachably connected, such that the second reset member 36 and the engaging pin 32 can be easily mounted in the second receiving cavity 312.

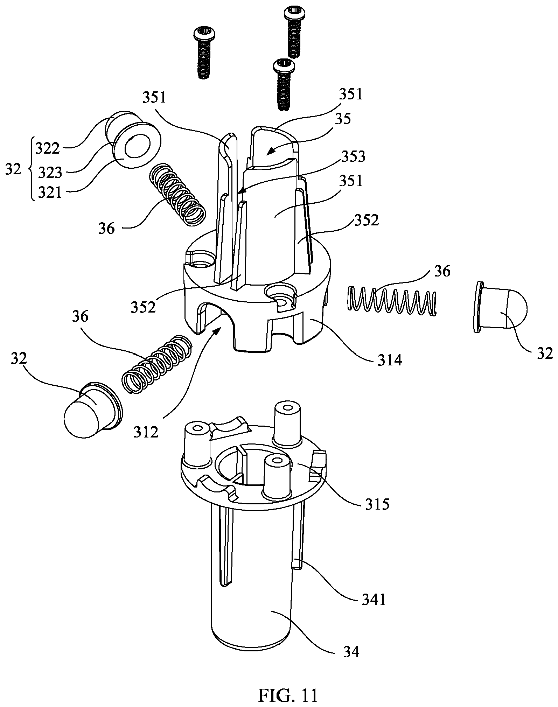

Specifically, as shown in FIGS. 11 to 13, the engaging pin 32 has a connection end 321 and a free end 322. A side wall of the receiving cylinder 13 is provided with a first limit hole 133 (see FIG. 8), which is a strip hole extending in a direction parallel to an axial direction of the receiving cylinder 13. The connection end 321 is provided in the second receiving cavity 312 and is capable of abutting against the second reset member 36. The connection end 321 has a limit boss 323 located within the second receiving cavity 312. The limit boss 323 is capable of abutting against a hole wall 3131 of the through hole 313 to prevent the engaging pin 32 from being detached from the second receiving cavity 312, and the free end 322 is capable of extending through the through hole 313 and out of the first limit hole 133. In this embodiment, the number of the engaging pins 32 corresponds to the number of the support leg assemblies 2. There are three support leg assemblies 2 and three engaging pins 32 correspondingly.

In other embodiments, the engaging pin 32 may also be fixed directly to the engaging seat 31. At this time, it is necessary to cooperate with the external force to operate first locking mechanism 3, such that the engaging seat 31 moves from the first position to the second position to avoid the engaging pin 32 from the rotation of the blocking snap box22.

Further, as shown in FIG. 10, the engaging seat 31 also has a receiving groove 35. The receiving groove 35 is enclosed by at least one curved plate 351, and an end of each curved plate 351 is connected to a surface of the first seat body 314 facing away from the second seat body 315. In this embodiment, the receiving groove 35 is enclosed by three curved plates 351, and a third opening 353 is formed between adjacent curved plates 351. The curved plate 351 has a reinforcing rib plate 352 facing away from the outside of the receiving groove 35 and an end of the reinforcing rib plate 352 extends to be connected to the first seat body 314, which enhances the strength of the curved plate 351 and prevents it from breaking. In this embodiment, the reinforcing rib plate 352 is provided on both sides of each curved plate 351 facing the third opening 353.

Further, as shown in FIGS. 4 and 12, the receiving cylinder 13 has a first abutting portion 131, and a groove bottom of the receiving groove 35 is hollowed out. The first reset member 33 is located within the receiving groove 35. An end of first reset member 33 abuts against the third abutting portion 354, and another end of first reset member 33 abuts against the first abutting portion 131. By disposing the first reset member 33 in the receiving groove 35, the first reset member 33 can be prevented from offsetting. The first reset member 33 permanently biases the engaging seat 31 to the first position. In other embodiments, the groove bottom of the receiving groove 35 may not be hollowed out, that is, the groove bottom of the receiving groove 35 forms the third abutting portion 354, and an end of the first reset member 33 abuts against the third abutting portion 354.

Further, as shown in FIGS. 8 and 10, an end of engaging seat 31 forms an operation portion 34. In this embodiment, the operation portion 34 is connected to a surface of the second seat body 315 facing away from the first seat body 314. In this embodiment, the operation portion 34 and the second seat body 315 are integrally formed. In other embodiments, the operation portion 34 and the second seat body 315 may be formed by connecting two separate components by welding, riveting or the like. The operation portion 34 is located at least partially outside of the receiving cylinder 13, such that the operation portion 34 can be operated by the user, thereby driving the engaging seat 31 to move and be switched between the first position and the second position.

In other embodiments, the operation portion 34 may be omitted, as long as the engaging seat 31 can be operated. For example, the engaging seat 31 may partially extends out of the receiving cylinder 13. At this time, the engaging seat 31 can be directly operated to move and be switched between the first position and the second position. Or the user may directly reach into the receiving cylinder 13 to operate the engaging seat 31 to move and be switched between the first position and the second position.

Thus, when the engaging seat 31 moves to the second position under the action of external force, the engaging pin 32 disengages from the snap box 22, and the support leg assembly 2 is rotated to the unfolded state under the action of its own gravity. When the external force is removed, the engaging seat 31 can be automatically reset to the first position under the action of the first reset member 33. The first reset member 33 may be spring, shrapnel, or the like. In other embodiments, the first reset member 33 may be omitted, and the engaging seat 31 may be moved to the first position manually.

Further, as shown in FIG. 4, an end of the receiving cylinder 13 away from the mounting portion 11 has a first opening 132 through which the operation portion 34 is capable of extending out of the receiving cylinder 13. In other embodiments, a third limit hole (not shown in the drawings) may be provided on a side wall of the receiving cylinder 13. The third limit hole is parallel to the axial direction of the receiving cylinder 13. An end of the operation portion 34 is connected to the engaging seat 31, and another end of the operation portion 34 extends out of the receiving cylinder 13 through the third stop hole, and is capable of moving along the third stop hole.

In an embodiment, as shown in FIGS. 2 to 4, the first opening 132 is covered by a limit cover 14 having a second opening 141 and a second limit projection 142 at an edge of the second opening 141. The engaging seat 31 has a first limit projection 341. The operation portion 34 is capable of extending out of the receiving cylinder 13 through the second opening 141, and the first limit projection 341 is capable of abutting against the second limit projection 142 to prevent the operation portion 34 together with the engaging seat 31 from being detached from the receiving cylinder 13 though the first opening 132. In other embodiments, the limit cover 14 may be omitted, and the engaging seat 31 may be limited within the receiving cylinder 13 by other means, such as providing the second limit projection 142 directly on an opening wall of the second opening 141.

In this embodiment, as shown in FIG. 6, the support leg assembly 2 is upturned upwards in a direction opposite to the first direction D1, that is, the support leg assembly 2 is rotated in a direction close to mounting portion 11, and operation portion 34 extends downwards out of receiving cylinder 13. When the support device needs to be unfolded and used, it is only necessary to press an end of the support device with the operation portion 34 against the ground or the table surface, and the operation portion 34 is capable of moving from the first position to the second position in a second direction D2 under an action of the reaction force of the ground or the table surface, such that the first locking mechanism 3 is unlocked, and the support leg assembly 2 is capable of being rotated to the unfolded position under the action of its own gravity, such that the support device can be unfolded more easily and quickly. It should be noted that in this embodiment, as described above, when the support leg assembly 2 is in the unfolded state, since the angle θₘₐₓ between the support leg assembly 2 and the support base 1 is greater than 90°, the mounting portion 11 will be supported by three support leg assemblies 2 and be in the overhead state. At this time, at least part of the operation portion 34 in the mounting portion 11 is also in the overhead state, that is, the operation portion 34 does not contact the ground or the table surface, such that the operation portion 34 is no longer subject to the reaction force of the ground or the table surface, therefore the engaging seat 31 automatically moves from the second position to the first position under the elastic force of the first reset member 33.

In other embodiments, the operation portion 34 may also be a separate component provided independently of the engaging seat 31. The operation portion 34 may be an operation sleeve (not shown in the drawings) sleeved outside the receiving cylinder 13 and slidable in a direction parallel to the axial direction of the receiving cylinder 13. The operation sleeve is connected to the engaging seat 31 via a first connector. The receiving cylinder 13 is provided with a second stop hole having a strip shape in a direction parallel to the axial direction of the receiving cylinder 13. The first connector is extended into the receiving cylinder 13 through a second limit hole, and the first connector is movable along the second limit hole. The operation sleeve moves the engaging seat 31 in the axial direction of the receiving cylinder 13 by the first connection, such that the engaging seat 31 moves and is switched between the first position and the second position. For other structure settings of first locking mechanism 3, please refer to the aforementioned embodiments.

Specifically, as shown in FIGS. 2 to 4, there are three second locking mechanisms 4, which are disposed between the three support leg assemblies 2 and their corresponding hinged portions 12 respectively. Take one of the second locking mechanisms 4 as an example. The second locking mechanisms 4 includes a spring pin assembly 41 disposed on the support leg assembly 2 and a locking hole 42 disposed on the lug 121. The spring pin assembly 41 is capable of being engaged with the locking hole 42 to lock the support leg assembly 2 at a preset angle. The preset angle includes at least the maximum angle θₘₐₓ of the support leg assembly 2 when fully unfolded. In this embodiment, a pair of locking holes 42 is correspondingly provided on two lugs 121 of each hinged portion 12. The spring pin assembly 41 is capable of being engaged with the pair of locking holes 42 to lock the support leg assembly 2 in the unfolded state. In other embodiments, the locking hole 42 may also be provided on only one of the lugs 121. The number of locking holes 42 can be multiple or multiple pairs. The spring pin assembly 41 is capable of locking the support leg assembly 2 in the half-unfolded state with any preset angle between the unfolded state and the folded state by engaging with different locking holes 42.

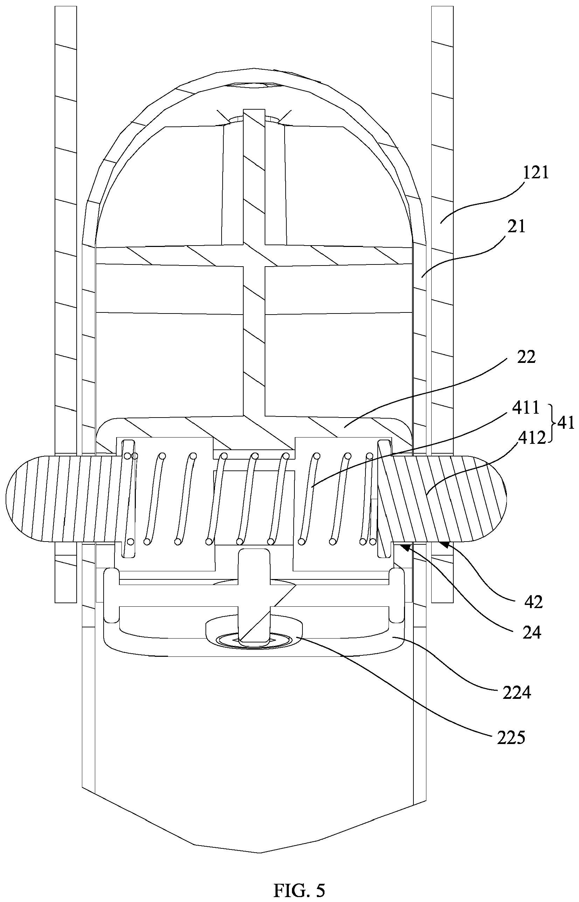

In one embodiment, as shown in FIG. 5, each spring pin assembly 41 includes two spring pins 412 and one third reset member 411. The spring pin assembly 41 is provided in the receiving hole 24. Specifically, an end of each spring pin 412 is located within the receiving hole 24, and another end thereof is capable of extending out of the receiving hole 24. The third reset member 411 is provided within the receiving hole 24 and both ends of the third reset member 411 abut against the two spring pins 412 respectively. The third reset member 411 permanently biases the two spring pins 412 in a direction of extending out of the receiving hole 24, such that the two spring pins 412 is capable of being engaged with the two locking holes 42 respectively. When the spring pin assembly 41 needs to be removed or replaced, the hole cover 224 of the snap box22 can be removed such that the spring pin assembly 41 in the receiving hole 24 is exposed, therefore the spring pin assembly 41 can be removed or mounted. When the support leg assembly 2 is rotated to a preset angle, the two spring pins 412 are pushed by the third reset member 411 to be engaged with the two locking holes 42 at the preset angle. While the two spring pins 412 are pressed to be disengaged from the two locking holes 42 respectively, such that the support leg assembly 2 can be rotated. The third reset member 411 may be spring, shrapnel, and the like.

When the support leg assembly 2 needs to be unfolded, the first locking mechanism 3 is operated to move from the locked state to the unlocked state, such that the locking of the support leg assembly 2 by the first locking mechanism 3 is released, such that the support leg assembly 2 is rotated from the folded state to the unfolded state. Meanwhile, the support leg assembly 2 is locked in the unfolded state by the second locking mechanism 4, such that the support leg assembly 2 is capable of being supported on the ground or the table surface without rotation. When the support leg assembly 2 needs to be folded, the locking of the support leg assembly 2 by the second locking mechanism 4 is released, the support leg assembly 2 can be rotated from the unfolded state to the folded state, and the support leg assembly 2 can be locked in the folded state by the first locking mechanism 3, thereby saving the storage space and the transportation space. The support device of this embodiment can easily realize the switch between the folded state and the unfolded state of support leg assembly 2 via the first locking mechanism 3. Meanwhile, when the support device is in a non-use state, the storage and transportation space can also be saved.

In other embodiments, the support device may not include the second locking mechanism 4, and the support leg assembly 2 may be parallel to the ground or the table surface when the support device is supported on the ground or the table surface. The support leg assembly 2 can remain in the unfolded state to support the object to be supported without the second locking mechanism 4.

The following are the specific operating principles of the support devices of the present disclosure.

As shown in FIGS. 7 and 8, when the support device is in the folded state and the first locking mechanism 3 is in the locked state, the engaging seat 31 is in the first position, and the engaging pin 32 abuts against the first locking projection 221 to limit the rotation of the support leg assembly 2 in the first direction D1, that is, the support leg assembly 2 is locked in the folded state by engaging the engaging pin 32 and the first locking projection 221. As shown in FIGS. 3 and 4, when the support device needs to be unfolded, the operation portion 34 can be pressed in the second direction D2 (specifically, the operation portion 34 can be pressed against the ground or the table surface by the reaction force of the ground or the table surface), such that the engaging seat 31 is moved from the first position to the second position, the first locking mechanism 3 is unlocked, the engaging pin 32 is disengaged from the first locking projection 221. The support leg assembly 2 is rotated to the unfolded state by its own gravity, and is locked in the unfolded state by the second locking mechanism 4. The pressing force applied to the operation portion 34 can then be released, and the engaging seat 31 automatically moves from the second position to the first position under the spring force of the first reset member 33. At the time, the engaging pin 32 is capable of abutting against the second locking projection 222 to limit the rotation of the support leg assembly 2 in the first direction D 1. The maximum unfolded angle of the support leg assembly 2 is limited by the combination of the engagement of the engaging pin 32 and second locking projection 222, the locking of the second locking mechanism 4 and the second side plate 212, and the limitation on the rotation of the support leg assembly 2 by the second side plate 212.

As shown in FIGS. 1 and 3, when it is necessary to fold the support leg assembly 2, the locking effect of the second locking mechanism 4 on the support leg assembly 2 is first released, that is, the spring pin 412 is pressed to release the engagement between the spring pin 412 and the locking hole 42. The support leg assembly 2 is then rotated in the opposite direction of the first direction D1. At the time, the engaging pin 32 abuts against the circular segment 223 or the first locking projection 221 and is pressed toward the second receiving cavity 312 until the engaging pin 32 completely passes the first locking projection 221. At that time, the engaging pin 32 extends to the support leg assembly 2 under the spring force of the second reset member 36 and is engaged with the first locking projection 221. In the process of locking the support leg assembly 2, the support leg assembly 2 can be easily folded by using the engaging pin 32 movably inserted in the second receiving cavity 312 without operating the first locking mechanism 3. When the snap box 22 is rotated to the folded state, the external force is released and the engaging seat 31 is moved from the second position to the first position, such that the engaging pin 32 is engaged with the first locking projection 221, thereby locking the support device in the folded state.

An embodiment of the present disclosure also provides an artificial tree, including a tree body and the support device according to any one of the aforementioned embodiments. The tree body is mounted on the mounting portion 11.

The aforementioned support devices and artificial trees have at least the following beneficial effects:

When the support device of the present disclosure is unfolded, the first locking mechanism 3 is operated to move from the locked state to the unlocked state, such that the locking of the support leg assembly 2 by the first locking mechanism 3 is released, therefore the support leg assembly 2 is rotated from the folded state to the unfolded state. Meanwhile, the support leg assembly 2 is locked in the unfolded state by the second locking mechanism 4, such that the support leg assembly 2 is capable of being supported on the ground or the table surface without rotation. When the support device is folded, the locking of the support leg assembly 2 by the second locking mechanism 4 is released, the support leg assembly 2 is capable of being rotated from the unfolded state to the folded state, and the support leg assembly 2 can be locked in the folded state by the first locking mechanism 3, thereby saving the storage space and the transportation space. The support device of this embodiment can be easily switched between the folded state and the unfolded state by the first locking mechanism. Meanwhile, when the support device is in the non-use state, the storage space and the transportation space can be saved.

When the foldable support device of the present disclosure is unfolded, the first locking mechanism 3 is operated to move from the locked state to the unlocked state, such that the locking of the support leg assembly 2 by the first locking mechanism 3 is released, such that the support leg assembly 2 is rotated from the folded state to the unfolded state. Meanwhile, the support leg assembly 2 is locked in the unfolded state by the second locking mechanism 4, such that the support leg assembly 2 is capable of being supported on the ground or the table surface without rotation. When the support device is folded, the locking of the support leg assembly 2 by the second locking mechanism 4 is released, the support leg assembly 2 is capable of being rotated from the unfolded state to the folded state, and the support leg assembly 2 can be locked in the folded state by the first locking mechanism 3, thereby saving the storage space and the transportation space. The support device of this embodiment can easily realize the switch between the folded state and the unfolded state via the first locking mechanism 3. Meanwhile, when the support device is in a non-use state, the storage space and the transportation space can also be saved.

The technical features of the aforementioned embodiments can be combined arbitrarily. For the sake of brevity, not all possible combinations of the technical features in the aforementioned embodiments are described. However, as long as there is no contradiction in the combination of these technical features, it is considered to be the range described in this specification.

The aforementioned examples only represent several embodiments of the present disclosure, and the descriptions thereof are specific and detailed, but should not be construed as a limitation on the scope of the invention patent. It should be noted that, for those skilled in the art, several variations and improvements may be made without departing from the concept of the present disclosure, and these are all within the protection scope of the present disclosure. Therefore, the protection scope of the present disclosure shall be defined by the appended claims.

## Claims

1. A foldable support device, comprising:
a support base provided with a hinged portion and a mounting portion configured to mount an object to be supported;
a support leg assembly hinged to the hinged portion; and
a first locking mechanism movably provided on the support base, wherein the first locking mechanism has a locked state and an unlocked state, the first locking mechanism is capable of locking the support leg assembly in a folded state when the first locking mechanism is in the locked state, the first locking mechanism is capable of releasing the locking of the support leg assembly in the folded state when the first locking mechanism is in the unlocked state, and the first locking mechanism is capable of being switched between the locked state and the unlocked state.

2. The support device according to claim 1, wherein the first locking mechanism comprises:
an engaging seat having a first position and a second position and being operable to be switched between the first position and the second position; and
an engaging pin provided in the engaging seat, wherein the engaging pin is engaged with the support leg assembly when the engaging seat is in the first position, and the engaging pin is disengaged from the support leg assembly when the engaging seat is in the second position.

3. The support device according to claim 2, wherein the support base has a receiving cylinder, a side wall of the receiving cylinder is provided with a first limit hole, the engaging seat is slidably provided within the receiving cylinder, the engaging pin has a connection end and a free end, the connection end is connected to the engaging seat, the free end is capable of extending out of the first limit hole, and another end of the engaging pin is capable of moving along the first limit hole when the engaging seat is switched between the first position and the second position.

4. The support device according to claim 3,
wherein the first limit hole extends in a direction parallel to an axial direction of the receiving cylinder; and/or
wherein the first locking mechanism comprises a first reset member provided within the receiving cylinder, and the first reset member permanently biases the engaging seat toward the first position.

5. The support device according to claim 4, wherein the engaging seat has a receiving groove, the receiving cylinder has a first abutting portion, the first reset member is provided within the receiving groove, an end of the first reset member abuts against a groove bottom of the receiving groove, and another end of the first reset member abuts against the first abutting portion.

6. The support device according to any one of claims 3 to 5, wherein the first locking mechanism comprises a second reset member provided within the engaging seat, and the second reset member permanently biases the engaging pin toward the support leg assembly.

7. The support device according to claim 6, wherein the engaging seat is provided with a second receiving cavity and a through hole in communication with the second receiving cavity, the second reset member is provided within the second receiving cavity, the engaging pin is at least partially movable in the second receiving cavity, an end of the second reset member abuts against an inner wall of the second receiving cavity, and another end of the second reset member abuts against the engaging pin, so as to permanently bias the engaging pin in a direction extending out of the through hole.

8. The support device according to claim 7,
wherein the engaging seat comprises a first seat body and a second seat body detachably connected to the first seat body, and the first seat body and the second seat body enclose to form the second receiving cavity; and/or
wherein a cavity wall of the second receiving cavity facing the through hole is provided with a limit projecting pillar, and the second reset member is sleeved on the limit projecting pillar; and/or
wherein the connection end has a limit boss located within the second receiving cavity, and the limit boss is capable of abutting against a hole wall of the through hole.

9. The support device according to any one of claims 3 to 8, wherein the engaging seat has an operation portion, and the operation portion at least partially extends out of the receiving cylinder.

10. The support device according to claim 9, wherein the mounting portion is connected to an end of the receiving cylinder, another end of the receiving cylinder away from the mounting portion has a first opening, and the operation portion is capable of extending out of the receiving cylinder through the first opening,
optionally wherein the first locking mechanism further comprises a limit cover, the engaging seat has a first limit projection, the limit cover covers the first opening, the limit cover has a second opening and a second limit projection arranged at an edge of the second opening, the operation portion is capable of extending out of the receiving cylinder through the second opening, and the first limit projection is capable of abutting against the second limit projection.

11. The support device according to any one of claims 3 to 8, wherein the first locking mechanism further comprises an operation portion, which is an operation sleeve sleeved outside the receiving cylinder and slidable in a direction parallel to an axial direction of the receiving cylinder, the operation sleeve is connected to the engaging seat via a first connector, the receiving cylinder is provided with a second limit hole, the first connector extends into the receiving cylinder through the second limit hole, and the first connector is movable along the second limit hole.

12. The support device according to any one of claims 2 to 11, wherein the support leg assembly has a first locking projection, and when the first locking mechanism is in the locked state, the engaging pin abuts against the first locking projection to limit the rotation of the support leg assembly in a first direction, and the first direction is a direction of rotation of the support leg assembly from the folded state to the unfolded state,
optionally wherein the support leg assembly further has a second locking projection, the second locking projection and the first locking projection are arranged separating from each other, and the engaging pin is capable of abutting against the second locking projection to limit the support leg assembly from being rotated in the first direction when the engaging seat is in the first position.

13. The support device according to any one of claims 1 to 12, further comprising a second locking mechanism comprising a spring pin assembly provided on the support leg assembly and a locking hole provided on the hinged portion, and the spring pin assembly is capable of being engaged with the locking hole to lock the support leg assembly at a predetermined angle.

14. The support device according to claim 13, wherein the spring pin assembly is capable of being engaged with the locking hole to lock the support leg assembly in the unfolded state,
optionally wherein the support leg assembly is provided with a receiving hole for receiving the spring pin assembly, the spring pin assembly comprises a spring pin and a third reset member, the third reset member permanently biases the spring pin to extend out of the receiving hole, such that the spring pin is engaged with the locking hole, and
optionally wherein the receiving hole is arranged in such a way that the receiving hole passes through a pair of opposite side walls of the support leg assembly, there are two spring pins, two ends of the third reset member abut against the two spring pins respectively, and the two spring pins are capable of being engaged with the two locking holes respectively.

15. The support device according to claim 13, wherein the support leg assembly comprises a snap box and a support leg body, the snap box is detachably disposed at an end of the support leg body, the snap box is hinged to the hinged portion, and the spring pin assembly is provided within the snap box,
optionally wherein the support leg assembly further comprises a pad disposed at another end of the support leg body away from the snap box.

16. The support device according to any one of claims 1 to 15, wherein the hinged portion comprises two lugs arranged in parallel with each other, the two lugs enclose to form a snap-in slot, and an end of the support leg assembly is inserted in the snap-in slot and hinged to the two lugs.

17. The support device according to claim 16, wherein the support base has a receiving cylinder, the first locking mechanism is disposed within the receiving cylinder and is movable in a direction parallel to an axial direction of the receiving cylinder, the mounting portion is disposed at an end of the receiving cylinder, and both the two lugs are connected to the side walls of the receiving cylinder; and/or
wherein the hinged portion further comprises a barrier plate connected between the two lugs, the barrier plate is provided with a limit groove, the support leg assembly has a limit protrusion, and when the support leg assembly is in the unfolded state, the limit protrusion is capable of being engaged with the limit groove.

18. The support device according to any one of claims 1 to 17,
wherein when the first locking mechanism is in the unlocked state, the support leg assembly is rotated to the unlocked state by its own gravity; and/or
wherein there are at least two support leg assemblies, the support base has at least two hinged portions, and the at least two support leg assemblies are hinged to the at least two hinged portions respectively.

19. An artificial tree comprising a tree body and the support device according to any one of claims 1 to 18, the tree body being mounted on the mounting portion.
